# FASCICULE DE BREVET EUROPEEN

(11) **EP 2 376 312 B1**
(45) Date de publication et mention de la délivrance du brevet: **31.10.2012**
(21) Numéro de dépôt: 09801222.2
(22) Date de dépôt: 07.12.2009
(51) Int. Cl.: B60R 16/027

(54) **CONTACTEUR TOURNANT POUR VÉHICULE AUTOMOBILE**
DREHSCHALTER FÜR EIN KRAFTFAHRZEUG
ROTARY CONTACTOR FOR AN AUTOMOBILE

(30) Priorité: 12.12.2008 FR 0807011
(43) Date de publication de la demande: 19.10.2011
(73) Titulaire: SC2N, 94042 Creteil Cedex (FR)
(72) Inventeur: CAVELLIER, Jacques, F-14125 Mondeville (FR); LEGOUBIN, Joël, F-14125 Mondeville (FR); TOUROUDE, Laurent, F-14125 Mondeville (FR); VIVIER, Yves, F-14125 Mondeville (FR)
(74) Mandataire: Pothmann, Karsten
(86) Numéro de dépôt international: PCT/FR2009/001397
(87) Numéro de publication internationale: WO 2010/066963

(56) Documents cités:
- WO-A-2006/002651
- DE-A1-102006 056 503
- US-A- 4 979 460
- US-A- 5 314 344

## Description

La présente invention concerne les contacteurs tournants pour véhicules automobiles, du genre comportant deux parties coaxiales montées mobiles l'une par rapport à l'autre avec intervention de moyens de transmissions électriques entre lesdites parties.

Usuellement l'une des parties précitées du contacteur, dite partie fixe, est destinée à être montée sur la colonne de direction du véhicule, tandis que l'autre desdites parties, dite partie mobile, est destinée à être liée en rotation au volant du véhicule automobile.

Les moyens de transmissions électriques permettent de relier électriquement un ou plusieurs premiers dispositifs liés au volant du véhicule à un ou plusieurs seconds dispositifs liés à la colonne de direction ou au châssis du véhicule. Les premiers dispositifs peuvent consister par exemple en des contacteurs électriques, tels que l'avertisseur sonore, ou en un dispositif de sécurité à coussin gonflable qui se gonfle en cas d'accident pour protéger le conducteur du véhicule.

Ces moyens de transmissions, par exemple en forme de ruban enroulé en spirale avec une boucle de retournement, entre les deux parties coaxiales du contacteur, permettent d'effectuer par exemple au moins trois tours de volant dans un sens et dans l'autre. Les extrémités du ruban sont alors reliées à des connecteurs montés respectivement sur la partie fixe et la partie mobile.

Certains contacteurs tournants prévoient de plus des bandes fermées élastiques pour guider et plaquer ce ruban contre la face interne de la partie fixe et contre la face externe de la partie mobile. On pourra à cet effet se référer au brevet US7311536 W2006/002651 au nom de la Demanderesse.

Généralement, le contacteur tournant est livré au constructeur automobile pour être monté sur la colonne de direction via un support de commutateurs placés sous le volant.

Pour ce faire le contacteur tournant doit être livré dans sa position neutre ou centrale afin de pouvoir effectuer, sans détérioration du contacteur, le nombre de tours de volant requis. Usuellement à cet effet, on maintient les parties dans cette position prédéterminée par exemple à l'aide d'un organe de blocage temporaire.

Pour cela, il est nécessaire d'identifier rapidement et facilement la position du contacteur tournant, pour le placer dans sa position neutre avant de le bloquer temporairement en rotation jusqu'au montage sur la colonne de direction.

L'invention a donc pour objectif de fournir un contacteur tournant optimisé permettant une telle identification de la position du contacteur tournant.

À cet effet, l'invention a pour objet un contacteur tournant pour véhicule automobile, comportant :
- une partie mobile configurée pour être liée en rotation au volant du véhicule,
- une partie fixe co-axiale à l'intérieur de laquelle se loge la partie mobile configurée pour être montée sur la colonne de direction,
- un ruban souple de liaison électrique enroulé entre lesdites parties mobile et fixe, à l'encontre duquel lesdites parties sont montées mobiles en rotation l'une par rapport à l'autre, ledit ruban étant attaché par ses extrémités d'une part à la partie mobile et d'autre part à la partie fixe,
- une pluralité de bandes fermées élastiques présentant chacune des sections d'engagement avec une première denture ménagée à l'intérieur de la partie fixe et avec une seconde denture ménagée à l'extérieur de la partie mobile pour plaquer ledit ruban contre les faces interne de la partie fixe et externe de la partie mobile, et
- un couvercle disposé au dessus de la partie mobile,
caractérisé en ce que une desdites bandes fermées élastiques est singularisée, et en ce que ledit couvercle est transparent de manière à voir ladite bande fermée élastique singularisée, et porte des repères :
- relatifs au nombre de tours effectués par la partie mobile et au sens de rotation, et
- agencés de telle sorte que lorsque la partie mobile tourne, ladite bande fermée singularisée se place sensiblement au niveau d'un desdits repères correspondant au nombre de tours effectués par la partie mobile et au sens de rotation.

On obtient donc un repérage aisé de la position dudit contacteur permettant de revenir de façon simple à la position neutre du contacteur, à partir de laquelle on peut effectuer un nombre de tours requis, dans un sens et d'ans l'autre sans détériorer ledit ruban, afin de le livrer chez le constructeur pour le montage sur la colonne de direction.

Ledit contacteur peut en outre comporter une ou plusieurs caractéristiques suivantes, prises séparément ou en combinaison :
- ladite bande fermée singularisée est de couleur différente par rapport aux autres bandes fermées élastiques ;
- ledit repère porté par le couvercle correspondant à une position neutre dudit contacteur est différencié par rapport aux autres repères, ladite position neutre étant une position à partir de laquelle ledit contacteur peut être tourné dans un sens et dans l'autre selon un nombre de tours prédéfini, ceci permet de localiser rapidement cette position neutre ;
- lesdits repères portés par le couvercle sont réalisés sous la forme de symboles présentant au moins un chevron en forme de « V », tel que le nombre de chevron correspond au nombre de tours de la partie mobile et tel que la pointe du « V » est relatif au sens de rotation ;
- lesdits symboles présentent chacun une forme générale fermée positionnée de sorte que lorsque la partie mobile tourne, une portion latérale prédéterminée de ladite bande fermée singularisée est située sensiblement à l'intérieur de ladite forme fermée correspondante ;
- lesdits repères portés par le couvercle comportent une association de premiers et de seconds caractères, dont les premiers correspondent au nombre de tours de la partie mobile et dont les seconds sont relatifs au sens de rotation ;
- ladite bande fermée singularisée comporte une portion longitudinale qui se place en regard de ladite association correspondante lorsque la partie mobile tourne ;
- ledit contacteur comporte un premier marqueur sur la partie fixe et un second marqueur sur la partie mobile positionnés de telle sorte que lesdits marqueurs sont alignés à chaque tour dudit contacteur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un contacteur tournant destiné à être monté sur un support de commutateurs fixé à la colonne de direction,
- la figure 2 représente un exemple de réalisation de moyens de transmission électriques intervenant entre les parties fixe et mobile dudit contacteur et de bandes fermées élastiques pour maintenir les moyens de transmission électriques,
- la figure 3 illustre un premier mode de réalisation pour repérer la position de la partie mobile dudit contacteur, et
- la figure 4 illustre un second mode de réalisation pour repérer la position de la partie mobile dudit contacteur.

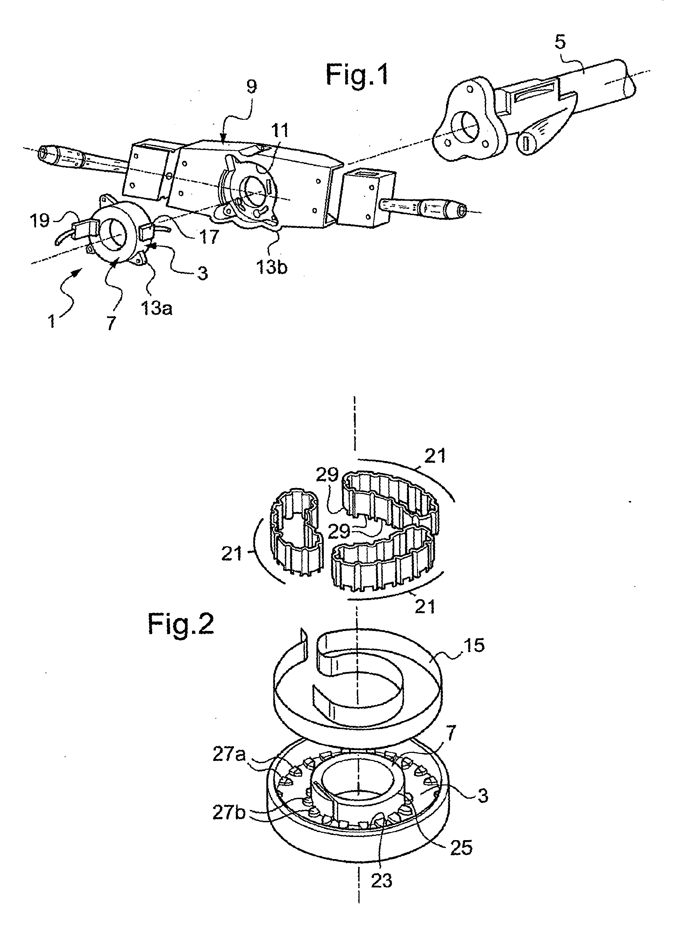

Sur la figure 1, on a représenté un contacteur 1 tournant pour véhicule automobile. Ce contacteur 1 comporte deux parties coaxiales montées mobiles l'une par rapport à l'autre avec intervention de moyens de transmissions électriques entre les deux parties coaxiales.

Plus précisément, le contacteur 1 comporte une première partie fixe 3, destinée à être montée sur la colonne de direction 5 du véhicule et une seconde partie mobile 7 co-axiale, destinée à être liée en rotation au volant (non représenté) du véhicule automobile.

La première partie fixe 3 est creuse de façon à recevoir la seconde partie mobile 7 et les deux parties fixe 3 et mobile 7 du contacteur 1 présentent un alésage de manière à pouvoir être traversées par l'axe de la colonne de direction 5.

La première partie fixe 3 est montée sur la colonne de direction 5 via un support 9 de commutateurs placés sous le volant. Ce support 9 est solidarisé à la colonne, par exemple par des vis, ou autres organes de fixation, et présente un logement 11 de réception du contacteur 1.

La première partie fixe 3 est montée sur le support 9, par exemple, par clipsage ou tout autre moyen tel que rivetage, vissage ou autre.

Dans l'exemple illustré, la partie fixe 3 comporte des oreilles 13a de fixation pénétrant dans des passages complémentaires 13b du support 9 et fixées au support 9.

Comme on le constate sur la figure 2, les moyens de transmission électrique peuvent être réalisés sous la forme d'un ruban souple 15 comportant un faisceau de fils électriques enrobé d'un isolant électrique. Le ruban 15 est enroulé en spirale avec une boucle de retournement et les parties coaxiales fixe 3 et mobile 7 sont mobiles l'une par rapport à l'autre à l'encontre de ce ruban 15. A cet effet, le ruban 15 est monté dans une cavité délimitée par les parties fixe 3 et mobile 7.

Les extrémités du ruban 15 pénètrent dans des connecteurs 17 et 19 (figure 1), d'orientation axiale, montés respectivement sur la partie fixe 3 et la partie mobile 7.

En variante, les moyens de transmission électrique sont réalisés sous la forme d'une bande de cuivre enroulée en spirale entre les deux parties fixe 3 et mobile 7 du contacteur 1. Bien entendu, les moyens de transmissions électriques peuvent avoir toute autre forme.

De plus, comme on le constate sur la figure 2, on prévoit une pluralité de bandes fermées élastiques 21, n'entrant pas en contact les unes avec les autres, pour plaquer le ruban 15 contre les faces interne 23 de la partie fixe 3 et externe 25 de la partie mobile 7. À cet effet, des première 27a et seconde 27b dentures sont ménagées respectivement à l'intérieur de la partie fixe 3 et à l'extérieur de la partie mobile 7, et les bandes fermées 21 présentent chacune des sections 29 d'engagement avec ces première 27a et seconde 27b dentures. On pourra par exemple se référer au brevet US7311536 au nom de la Demanderesse.

Par ailleurs, il est important de livrer le contacteur 1 dans une position neutre des deux parties co-axiales fixe 3 et mobile 7 permettant d'effectuer le nombre de tours requis, à savoir au moins trois tours, dans un sens et d'ans l'autre sans détériorer les moyens de transmission, une fois le contacteur monté sur la colonne de direction. En effet, ceci permet d'éviter qu'un dispositif lié au volant, par exemple un coussin gonflable de sécurité, soit hors service, réduisant ainsi la sécurité dans le véhicule.

Il est donc nécessaire de distinguer facilement la position du contacteur tournant avant de le bloquer dans sa position neutre pour livraison chez le constructeur.

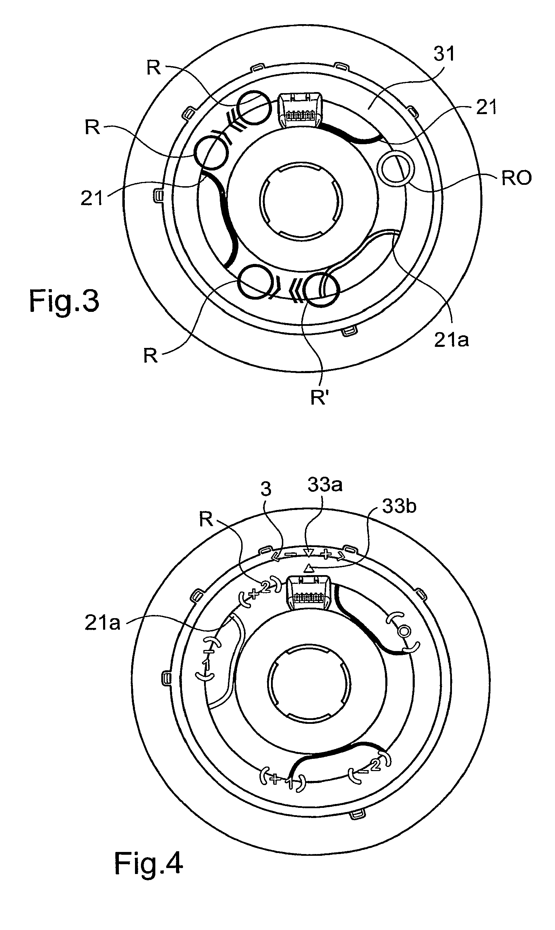

La figure 3 illustre un premier mode de réalisation permettant de distinguer facilement la position du contacteur tournant 1.

Pour cela, une 21a des bandes fermées élastiques 21 est singularisée, de préférence par une couleur différente par rapport aux autres bandes fermées élastiques. Dans l'exemple illustré, la bande fermée 21a singularisée est blanche et les autres bandes fermées 21 sont noires.

On prévoit alors un couvercle 31 transparent disposé au dessus de la partie mobile 7 permettant de voir la bande fermée blanche 21 a.

Ce couvercle 31 porte en outre des repères R relatifs au nombre de tours effectués par la partie mobile 7 et au sens de rotation, pour revenir dans la position neutre du contacteur 1. On peut prévoir que le sens de rotation indiqué par les repères R fait référence au sens de rotation du ou des tours effectués en partant de la position neutre.

Pour mieux distinguer cette position neutre, on peut prévoir de différencier le repère R0 associé, par exemple par une couleur différente.

Ainsi, selon ce premier mode de réalisation, les repères R sont réalisés sous la forme de symboles présentant au moins un chevron en forme de « V ». Le nombre de chevrons correspond au nombre de tours de la partie mobile 7 et la pointe du « V » est relatif au sens de rotation. Ces symboles peuvent de plus présenter chacun une forme générale fermée, par exemple un cercle dans l'exemple illustré, ou encore un triangle.

Ces symboles sont donc agencés sur le couvercle transparent de telle sorte que lorsque la partie mobile 7 tourne, la bande fermée blanche 21a se place sensiblement au niveau du repère correspondant au nombre de tours effectués par la partie mobile et au sens de rotation.

Dans l'exemple illustré, la partie mobile 7 a effectué deux tours vers la gauche à partir de la position neutre R0. La bande fermée blanche présente donc une portion latérale située sensiblement à l'intérieur d'un cercle R' associé à deux chevrons dont les pointes indiquent un sens de rotation horaire. Ceci signifie que la partie mobile 7 doit effectuer deux tours dans le sens horaire pour revenir dans la position neutre.

Un second mode de réalisation illustré par la figure 4, diffère du premier mode de réalisation décrit ci-dessus par le fait que les repères portés par le couvercle comportent une association de premiers et de seconds caractères.

Dans ce mode de réalisation, les premiers caractères sont des chiffres correspondant au nombre de tours de la partie mobile 7.

En référence à la figure 4, les seconds caractères sont les caractères mathématiques « plus » (+) et « moins » (-), le « plus » indiquant les tours à droite (sens horaire), le « moins » indiquant les tours à gauche (sens anti-horaire).

Selon une alternative non représentée, les seconds caractères sont des lettres.

Pour une meilleure compréhension, on peut graver sur la partie fixe 3 les symboles indiquant les sens de rotation.

Dans l'exemple illustré, la partie mobile 7 a effectué un tour vers la gauche à partir de la position neutre.

La bande fermée blanche présente donc une portion longitudinale qui se place en regard de l'association correspondante de manière à l'encadrer, à savoir « -1 ». Le repère à lire est donc centré dans la bande fermée blanche 21a alors que les autres repères se trouvent aux extrémités des autres bandes fermées 21 noires.

Pour revenir dans la position neutre, la partie mobile 7 doit donc tourner une fois vers la droite.

En outre, afin d'améliorer le repérage de la position de la partie mobile 7, on prévoit un premier marqueur 33a sur la partie fixe et un second marqueur 33b sur la partie mobile 7 positionnés de telle sorte que les marqueurs 33a,33b sont alignés à chaque tour.

On comprend donc que les repères marqués sur le couvercle transparent et la bande fermée blanche 21 a permettent une visualisation rapide de la position du contacteur tournant 1. De plus, la distinction de la bande fermée blanche 21 a facilite une visualisation industrielle par caméra.

## Revendications

1. Contacteur tournant pour véhicule automobile, comportant :
- une partie mobile (7) configurée pour être liée en rotation au volant du véhicule,
- une partie fixe (3) co-axiale à l'intérieur de laquelle se loge la partie mobile (7), configurée pour être montée sur la colonne de direction,
- un ruban (15) souple de liaison électrique enroulé entre lesdites parties mobile (7) et fixe (3), à l'encontre duquel lesdites parties (3,7) sont montées mobiles en rotation l'une par rapport à l'autre, ledit ruban (15) étant attaché par ses extrémités d'une part à la partie mobile (7) et d'autre part à la partie fixe (3),
- une pluralité de bandes fermées élastiques (21) présentant chacune des sections d'engagement (29) avec une première denture (27a) ménagée à l'intérieur de la partie fixe (3) et avec une seconde denture (27b) ménagée à l'extérieur de la partie mobile (7) pour plaquer ledit ruban (15) contre les faces interne (23) de la partie fixe (3) et externe (25) de la partie mobile (7), et
- un couvercle (31) disposé au dessus de la partie mobile (7),
**caractérisé en ce que** :
- une (21a) desdites bandes fermées (21) élastiques est singularisée, et **en ce que**
- ledit couvercle (31) est transparent de manière à voir ladite bande fermée (21 a) élastique singularisée, et porte des repères (R) :
● relatifs au nombre de tours effectués par la partie mobile (7) et au sens de rotation, et
● agencés de telle sorte que lorsque la partie mobile (7) tourne, ladite bande fermée (21 a) singularisée se place sensiblement au niveau d'un desdits repères (R) correspondant au nombre de tours effectués par la partie mobile (7) et au sens de rotation.

2. Contacteur selon la revendication 1, **caractérisé en ce que** ladite bande fermée (21a) singularisée est de couleur différente par rapport aux autres bandes fermées (21) élastiques.

3. Contacteur selon l'une des revendications 1 ou 2, **caractérisé en ce que** ledit repère (R0) porté par le couvercle correspondant à une position neutre dudit contacteur (1) est différencié par rapport aux autres repères (R), ladite position neutre étant une position à partir de laquelle ledit contacteur (1) peut être tourné dans un sens et dans l'autre selon un nombre de tours prédéfini.

4. Contacteur selon l'une quelconque des revendications 1 à 3, **caractérisé en ce que** lesdits repères (R) portés par le couvercle sont réalisés sous la forme de symboles présentant au moins un chevron en forme de « V », tel que le nombre de chevron correspond au nombre de tours de la partie mobile et tel que la pointe du « V » est relatif au sens de rotation.

5. Contacteur selon la revendication 4, **caractérisé en ce que** lesdits symboles présentent chacun une forme générale fermée positionnée de sorte que lorsque la partie mobile (7) tourne, une portion latérale prédéterminée de ladite bande fermée (21a) singularisée est située sensiblement à l'intérieur de ladite forme fermée correspondante.

6. Contacteur selon l'une quelconque des revendications 1 à 3, **caractérisé en ce que** lesdits repères (R) portés par le couvercle (31) comportent une association de premiers et de seconds caractères, dont les premiers correspondent au nombre de tours de la partie mobile (7) et dont les seconds sont relatifs au sens de rotation.

7. Contacteur selon la revendication 6, **caractérisé en ce que** ladite bande fermée (21a) singularisée comporte une portion longitudinale qui se place en regard de ladite association correspondante lorsque la partie mobile (7) tourne.

8. Contacteur selon l'une quelconque des revendications 1 à 7, **caractérisé en ce qu'**il comporte un premier marqueur (33a) sur la partie fixe (3) et un second marqueur (33b) sur la partie mobile (7) positionnés de telle sorte que lesdits marqueurs (33a,33b) sont alignés à chaque tour dudit contacteur.

## Claims

1. Rotary contact switch for a motor vehicle, comprising:
- a moving part (7) configured to be connected to rotate as one with the steering wheel of the vehicle,
- a coaxial fixed part (3) inside which the moving part (7) is housed, configured to be mounted on the steering column,
- a flexible electrical connection ribbon (15) sound between said moving (7) and fixed (3) parts, against which said parts (3, 7) are mounted so that they are able to move in a rotational movement relative to one another, said ribbon (15) being attached by its ends firstly to the moving part (7) and secondly to the fixed part (3),
- a plurality of closed elastic strips (21), each having sections (29) for engaging with a first tooth set (27a) formed on the inside of the fixed part (3) and with a second tooth set (27b) formed on the outside of the moving part (7) so as to press said ribbon (15) firmly against the internal face (23) of the fixed part (3) and the external face (25) of the moving part (7), and
- a cover (31) placed over the moving part (7), **characterized in that**:
- one (21a) of said closed elastic strips (21) is made more distinctive, and **in that**
- said cover (31) is transparent so that said distinctive closed elastic strip (21a) can be seen, and bears reference marks (R):
● relating to the number of turns effected by the moving part (7) and to the direction of rotation, and
● arranged so that when the moving part (7) turns, said distinctive closed strip (21a) becomes positioned more or less in the region of one of said reference marks (R) corresponding to the number of turns effected by the moving part (7) and to the direction of rotation.

2. Contact switch according to Claim 1, **characterized in that** said distinctive closed strip (21a) is a different color compared to the other elastic closed strips (21).

3. Contact switch according to one of Claims 1 and 2, **characterized in that** said reference mark (R0) borne by the cover corresponding to a neutral position of said contact switch (1) is differentiated from the other reference marks (R), said neutral position being a position from which said contact switch (1) can be turned a predefined number of turns in both directions.

4. Contact switch according to any one of Claims 1 to 3, **characterized in that** said reference marks (R) borne by the cover are produced in the form of symbols having at least one V-shaped chevron such that the number of chevron markings corresponds to the number of turns effected by the moving part and such that the point of the V relates to the direction of rotation.

5. Contact switch according to Claim 4, **characterized in that** said symbols each have a closed overall shape positioned so that when the moving part (7) turns, a predetermined lateral portion of said distinctive closed strip (21a) lies substantially inside said corresponding closed shape.

6. Contact switch according to any one of Claims 1 to 3, **characterized in that** said reference marks (R) borne by the cover (31) comprise a combination of first and second characters, the first characters of which correspond to the number of turns of the moving part (7) and the second characters of which relate to the direction of rotation.

7. Contact switch according to Claim 6, **characterized in that** said distinctive closed strip (21a) comprises a longitudinal portion which becomes positioned facing said corresponding combination when the moving part (7) turns.

8. Contact switch according to any one of Claims 1 to 7, **characterized in that** it comprises a first marker (33a) on the fixed part (3) and a second marker (33b) on the moving part (7), said markers (33a, 33b) being positioned in such a way that they come into alignment on each turn of said contact switch.

## Patentansprüche

1. Drehschalter für ein Kraftfahrzeug, der enthält:
- einen beweglichen Teil (7), der konfiguriert ist, um in Drehung mit dem Lenkrad des Fahrzeugs verbunden zu sein,
- einen koaxialen ortsfesten Teil (3), in dessen Innerem der bewegliche Teil (7) untergebracht ist, der konfiguriert ist, um auf die Lenksäule montiert zu werden,
- einen flexiblen Streifen (15) zur elektrischen Verbindung, der zwischen dem beweglichen (7) und dem ortsfesten Teil (3) gewickelt ist, gegen den die Teile (3, 7) drehbeweglich zueinander montiert sind, wobei der Streifen (15) über seine Enden einerseits am beweglichen Teil (7) und andererseits am ortsfesten Teil (3) befestigt ist,
- eine Vielzahl geschlossener elastischer Bänder (21), die je Eingriffsabschnitte (29) mit einer ersten Zahnung (27a), die innerhalb des ortsfesten Teils (3) vorgesehen ist, und mit einer zweiten Zahnung (27b) aufweisen, die außerhalb des beweglichen Teils (7) vorgesehen ist, um den Streifen (15) gegen die Innenseite (23) des ortsfesten Teils (3) und die Außenseite (25) des beweglichen Teils (7) zu drücken, und
- einen Deckel (31), der über dem beweglichen Teil (7) angeordnet ist,
**dadurch gekennzeichnet, dass**:
- eines (21a) der geschlossenen elastischen Bänder (21) hervorgehoben wird, und dass
- der Deckel (31) durchsichtig ist, um das hervorgehobene geschlossene elastische Band (21a) zu sehen, und Bezugspunkte (R) trägt:
● bezüglich der Anzahl von vom beweglichen Teil (7) durchgeführten Umdrehungen und der Drehrichtung, und
● so angeordnet, dass, wenn der bewegliche Teil (7) sich dreht, das hervorgehobene geschlossene Band (21a) sich im Wesentlichen im Bereich eines der Bezugspunkte (R) anordnet, der der Anzahl der vom beweglichen Teil (7) durchgeführten Umdrehungen und der Drehrichtung entspricht.

2. Schalter nach Anspruch 1, **dadurch gekennzeichnet, dass** das hervorgehobene geschlossene Band (21a) eine andere Farbe als die anderen geschlossenen elastischen Bänder (21) hat.

3. Schalter nach einem der Ansprüche 1 oder 2, **dadurch gekennzeichnet, dass** der vom Deckel getragene Bezugspunkt (R0) entsprechend einer neutralen Stellung des Schalters (1) sich von den anderen Bezugspunkten (R) unterscheidet, wobei die neutrale Stellung eine Stellung ist, von der ausgehend der Schalter (1) in der einen und anderen Richtung gemäß einer Vorbestimmten Anzahl von Umdrehungen gedreht werden kann.

4. Schalter nach einem der Ansprüche 1 bis 3, **dadurch gekennzeichnet, dass** die vom Deckel getragenen Bezugspunkte (R) in Form von Symbolen hergestellt werden, die mindestens einen Spitzkörper in Form eines «V» aufweisen, derart, dass die Anzahl von Spitzkörpern der Anzahl von Umdrehungen des beweglichen Teils entspricht, und derart, dass die Spitze des «V» sich auf die Drehrichtung bezieht.

5. Schalter nach Anspruch 4, **dadurch gekennzeichnet, dass** die Symbole je eine allgemeine geschlossene Form aufweisen, die so positioniert ist, dass, wenn der bewegliche Teil (7) sich dreht, ein Vorbestimmter seitlicher Teil des hervorgehobenen geschlossenen Bands (21a) sich im Wesentlichen im Inneren der entsprechenden geschlossenen Form befindet.

6. Schalter nach einem der Ansprüche 1 bis 3, **dadurch gekennzeichnet, dass** die vom Deckel (31) getragenen Bezugspunkte (R) eine Zuordnung erster und zweiter Buchstaben aufweisen, von denen die ersten der Anzahl von Umdrehungen des beweglichen Teils (7) entsprechen und die zweiten sich auf die Drehrichtung beziehen.

7. Schalter nach Anspruch 6, **dadurch gekennzeichnet, dass** das hervorgehobene geschlossene Band (21a) einen Längsteil aufweist, der sich vor der entsprechenden Zuordnung positioniert, wenn der bewegliche Teil (7) sich dreht.

8. Schalter nach einem der Ansprüche 1 bis 7, **dadurch gekennzeichnet, dass** er einen ersten Marker (33a) auf dem ortsfesten Teil (3) und einen zweiten Marker (33b) auf dem beweglichen Teil (7) aufweist, die so positioniert sind, dass die Marker (33a, 33b) bei jeder Umdrehung des Schalters fluchtend ausgerichtet werden.
